# FASCICULE DE BREVET EUROPEEN

(11) **EP 3 296 920 B1**
(45) Date de publication et mention de la délivrance du brevet: **13.03.2019**
(21) Numéro de dépôt: 16290177.1
(22) Date de dépôt: 16.09.2016
(51) Int. Cl.: G06K 9/00, G05D 1/02

(54) **SYSTÈME ET MÉTHODE D'ASSISTANCE À LA CONDUITE D'UN VÉHICULE**
FAHRERASSISTENZSYSTEM UND -METHODE FÜR EIN FAHRZEUG
SYSTEM AND METHOD TO ASSIST WITH DRIVING A VEHICLE

(43) Date de publication de la demande: 21.03.2018
(73) Titulaire: Siemens S.A.S., 93527 Saint-Denis Cedex (FR)
(72) Inventeur: Marchand, Denis, F-91470 Limours (FR)
(74) Mandataire: Maier, Daniel Oliver

(56) Documents cités:
- EP-A2- 0 982 699
- WO-A1-2005/086112
- FR-A1- 2 580 097
- FR-A1- 2 678 560
- US-A- 3 642 087
- US-A1- 2010 328 054

## Description

La présente invention concerne un système et une méthode d'assistance à la conduite par détermination d'une vitesse recommandée pour un véhicule configuré pour se déplacer le long d'une voie de circulation prédéfinie et équipée d'une infrastructure sol permettant d'aider un conducteur dudit véhicule à suivre une trajectoire prédéfinie selon une dynamique prédéfinie. La présente invention concerne en particulier des véhicules utilisés pour les transports en commun, tel que les bus ou les trolleys bus, ladite infrastructure sol équipant la voie de circulation comprenant par exemple une signalisation peinte sur le sol et définissant une trajectoire bien précise pour ledit véhicule, ce dernier comprenant un système de vision capable de lire et déterminer la trajectoire définie par ladite infrastructure, i.e. par exemple par ladite signalisation, afin d'assister le conducteur lors de sa conduite dudit véhicule. De tels systèmes d'assistance à la conduite par guidage optique au moyen dudit système de vision sont notamment connus de l'homme du métier. Les documents EP0982699 et WO2005/086112 divulguent tels systèmes.

Une problématique liée à de tels véhicules est notamment l'adaptation de la vitesse dudit véhicule par son conducteur en fonction du contexte local ou des conditions locales de la voie de circulation (par exemple virage, accostage à un quai, etc.). Usuellement, des panneaux de signalisation permettent d'indiquer la vitesse la mieux adaptée aux conditions locales d'une voie de circulation par type de véhicules. D'autres solutions utilisent un positionnement GPS et une carte adaptée afin de définir la vitesse limite le long de la voie de circulation. Des systèmes embarqués permettent une détermination d'une vitesse limite autorisée pour une portion de voie par lecture de panneaux de signalisation indicateurs de vitesse installés en bordure de voie de circulation et un avertissement, par exemple sonore ou visuel, du conducteur en cas de dépassement de la vitesse limite autorisée.

Néanmoins les solutions existantes exigent usuellement une infrastructure sol complexe nécessitant d'une part l'installation de panneaux de signalisation indicateurs de vitesse, et d'autre part un marquage au sol indicateur de trajectoire. De plus, les panneaux de signalisations ne permettent pas d'indiquer la vitesse de façon continue : en effet, un panneau de signalisation indique par exemple en début de courbe une vitesse limite en un point discret de la voie de circulation et est incapable de donner une indication continue de la vitesse la mieux adaptée à la courbe du début de cette dernière à sa fin.

La présente invention permet de simplifier et de rendre plus précis, voire continu, la signalisation d'une vitesse recommandée pour une portion ou partie de voie de circulation pour un véhicule, permettant également dans une variante préférée un contrôle automatique au moins temporaire de la vitesse dudit véhicule en fonction de ladite vitesse recommandée. A cette fin, un système et une méthode de détermination d'une vitesse recommandée pour un véhicule circulant sur une voie de circulation sont proposés par le contenu des revendications 1 et 7. Un ensemble de sous-revendications présente également d'autres avantages de l'invention.

La présente invention concerne ainsi notamment un système d'assistance à la conduite par détermination d'une vitesse recommandée pour un véhicule se déplaçant le long d'une voie de circulation, ledit système permettant ainsi d'assister un conducteur dans sa conduite du véhicule, par exemple lors d'une courbe de ladite voie de circulation sur laquelle circule ledit véhicule, ledit système comprenant :
- une caméra destinée à être embarquée à bord dudit véhicule, ladite caméra étant préférentiellement configurée pour être installée à l'avant dudit véhicule, ladite caméra étant configurée pour prendre des images d'une infrastructure sol équipant la voie de circulation ;
- ladite infrastructure sol équipant au moins une partie de ladite voie de circulation, ladite infrastructure sol comprenant au moins un marquage au sol comprenant un codage de la vitesse recommandée pour une partie de la voie de circulation pour ledit véhicule;
- un dispositif embarqué de détermination de vitesse recommandée capable d'identifier ladite infrastructure sol dans les images acquises par la caméra et configuré pour déterminer en temps réel la vitesse V recommandée pour ladite partie de voie de circulation par décodage du codage de la vitesse recommandée dans les images acquises par la caméra, ledit dispositif embarqué étant de plus configuré pour transmettre une consigne de vitesse V recommandée ;
- un dispositif d'assistance à la conduite configuré pour recevoir ladite consigne de vitesse V recommandée et utiliser cette dernière afin d'assister ledit conducteur lors de la conduite du véhicule sur ladite partie de voie de circulation. Ladite assistance fournie par le dispositif d'assistance peut notamment prendre plusieurs formes :
   o le dispositif d'assistance peut par exemple simplement indiquer en temps réel au conducteur la vitesse V recommandée fournie par ladite consigne. Cette indication est par exemple faite à titre informatif pour le conducteur ; et/ou
   o le dispositif d'assistance peut par exemple comparer en temps réel la vitesse V recommandée à la vitesse réelle dudit véhicule et alerter le conducteur si cette dernière excède la vitesse V recommandée ;
   o le dispositif d'assistance peut par exemple contrôler automatiquement la vitesse réelle dudit véhicule en fonction de la consigne de vitesse V recommandée déterminée en temps réel. En d'autres termes, selon ce dernier mode de réalisation, la vitesse réelle du véhicule est automatiquement contrôlée par le dispositif d'assistance de façon à être égale à la vitesse V recommandée. Le conducteur a alors un rôle passif, n'ayant plus besoin de continuellement contrôler la vitesse du véhicule, cette dernière étant contrôlée par le dispositif d'assistance à la conduite pour au moins ladite partie de voie de circulation. Néanmoins, ledit conducteur peut toujours intervenir dans le contrôle de la vitesse du véhicule, par exemple en accélérant ou décélérant ledit véhicule en fonction des situations de conduite et/ou des conditions de la voie de circulation.

La présente invention permet ainsi notamment de simplifier l'infrastructure sol nécessaire pour signaler la vitesse adaptée à des conditions locales d'une voie de circulation et permet également de donner une indication continue de la vitesse la mieux adaptée à une partie ou tronçon de voie de circulation, par exemple pour une courbe.

La présente invention concerne également une méthode d'assistance à la conduite d'un véhicule se déplaçant le long d'une voie de circulation par détermination d'une vitesse recommandée pour ledit véhicule pour au moins une partie de ladite voie de circulation, ladite méthode permettant ainsi d'assister ledit conducteur du véhicule dans la conduite de ce dernier, ladite méthode comprenant :
- un codage d'une vitesse recommandée au moyen d'ùn marquage au sol pour au moins une partie de la voie de circulation. Ladite méthode peut également comprendre un codage continu de la vitesse recommandée par un marquage au sol s'étendant du début à la fin de la voie de circulation, ou un codage de la vitesse recommandée uniquement sur certaines parties de ladite voie de circulation, par exemple pour des courbes ou de manière générale pour des parties de voie de circulation nécessitant une décélération ou une accélération du véhicule ;
- une détermination de ladite vitesse V recommandée au moyen d'un dispositif embarqué de détermination de vitesse recommandée, ledit dispositif embarqué étant configuré pour déterminer en temps réel ladite vitesse V recommandée par décodage dudit codage de la vitesse recommandée dans des images acquises par une caméra embarquée à bord dudit véhicule ;
- préférentiellement une émission par ledit dispositif de détermination embarqué d'une consigne de vitesse V recommandée ;
- une utilisation de la consigne de vitesse V recommandée pour assister ledit conducteur lors de sa conduite du véhicule sur ladite partie de voie de circulation, par exemple en indiquant audit conducteur et en temps réel la vitesse V recommandée pour ladite partie de voie, ou en signalant au conducteur un dépassement de ladite vitesse recommandée, ou encore en contrôlant la vitesse dudit véhicule en fonction de la consigne de vitesse V recommandée.

Ainsi, selon la présente invention, le dispositif embarqué de détermination de la vitesse recommandée est notamment capable de déterminer la vitesse V recommandée en analysant le marquage au sol de l'infrastructure sol et en déterminant une information relative à la vitesse recommandée encodée dans ledit marquage au sol, ledit marquage au sol pouvant dès lors avoir par exemple la double fonction de guidage dudit véhicule en prédéfinissant une trajectoire pour ce dernier et de signalement de vitesse recommandée en encodant cette dernière, par exemple dans un motif dudit marquage, et préférentiellement de manière continue. La présente invention permet par exemple de fournir continuellement une indication de la vitesse recommandée lors d'une partie de voie de circulation, par exemple une courbe ou un point d'arrêt dans le cas d'une station de bus, par variation dudit motif du marquage au sol. En effet, selon la présente invention, les variations de vitesses recommandées pour des parties de voie de circulations sont encodées par des variations du motif dudit marquage au sol. En particulier, la forme géométrique dudit motif reste la même quelle que soit la vitesse recommandée, mais au moins une dimension de ladite forme géométrique change en fonction de ladite vitesse recommandée, par exemple, ledit motif est un cercle et le diamètre dudit cercle change en fonction de la vitesse recommandée.

Afin de mieux comprendre la présente invention, des exemples de réalisation et d'application sont fournis à l'aide de:
- Figure 1: exemple de réalisation d'un système d'assistance à la conduite selon l'invention.
- Figure 2: exemple de réalisation d'un marquage au sol selon l'invention.
- Figure 3: exemple d'encodage de la vitesse recommandée.
- Figure 4: exemple de réalisation d'un contrôle automatique de la vitesse d'un véhicule par variation du marquage au sol.

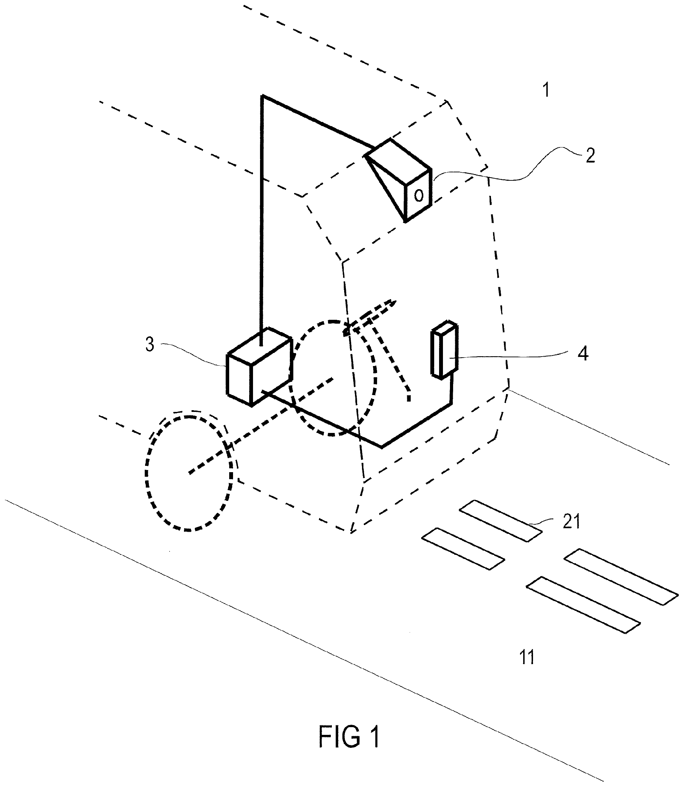

La figure 1 présente schématiquement un véhicule 1, équipé d'un système d'assistance à la conduite selon l'invention. Ledit système d'assistance à la conduite comprend notamment :
- une caméra 2 configurée pour prendre des images d'une voie de circulation 11 sur laquelle ledit véhicule 1 est destiné à circuler. Ladite caméra 2 est montée préférentiellement à l'avant dudit véhicule 1 de façon à pouvoir prendre des images de la voie de circulation 11 en aval dudit véhicule 1, ce dernier se déplaçant en marche avant d'amont vers aval. Ladite caméra 2 peut notamment comprendre une mémoire servant à stocker les images acquises ;
- une infrastructure sol destinée à encoder une vitesse recommandée pour ledit véhicule pour au moins une partie de la voie de circulation. Ladite infrastructure sol peut également servir au guidage du véhicule 1 en prédéfinissant pour ledit véhicule une trajectoire prédéfinie par ladite infrastructure sol. Selon la présente invention, ladite infrastructure sol comprend au moins un marquage 21 apposé sur le sol de façon à encoder ladite vitesse recommandée pour ledit véhicule à l'emplacement dudit marquage et pouvant préférentiellement définir également ladite trajectoire pour ledit véhicule. Selon la présente invention, la caméra 2 embarquée à bord dudit véhicule est configurée pour prendre des images dudit marquage 21 au sol de façon à collecter dans lesdites images acquises une information encodant ladite vitesse recommandée pour ledit véhicule 1;
- un dispositif embarqué 3 à bord du véhicule 1 et configuré pour déterminer en temps réel la vitesse recommandée pour ledit véhicule à partir des images acquises par la caméra 2. Ledit dispositif embarqué 3 est en particulier connecté à la caméra 2 afin de récupérer en temps réel lesdites images de l'infrastructure sol. Ledit dispositif embarqué 3 peut comprendre un calculateur et une mémoire afin de procéder à l'analyse desdites images, voire pour les stocker. Ledit dispositif embarqué 3 est ainsi en particulier configuré pour analyser les images acquises par la caméra 2, identifier dans ces dernières ledit marquage 21 au sol, et déterminer la vitesse V recommandée en décodant dans les images acquises par la caméra 2 ledit codage de la vitesse V recommandée, par exemple en identifiant un motif dudit marquage au sol et en faisant correspondre une et une seule vitesse recommandée audit motif. Une fois la vitesse recommandée déterminée, ledit dispositif embarqué 3 est configuré pour créer et transmettre en temps réel une consigne de vitesse recommandée, i.e. une consigne relative à la vitesse recommandée pour ladite partie de voie, ladite consigne étant notamment transmise en temps réel par ledit dispositif embarqué 3 à un dispositif d'assistance 4 à la conduite;
- le dispositif d'assistance 4 à la conduite est quant à lui configuré pour assister le conducteur dans la conduite dudit véhicule en utilisant ladite consigne de vitesse. Ledit dispositif d'assistance 4 peut notamment comprendre un écran d'affichage pour afficher ladite consigne de vitesse. Il peut préférentiellement agir comme un régulateur de vitesse en contrôlant automatiquement la vitesse dudit véhicule en fonction de ladite vitesse V recommandée de façon à ce que la vitesse dudit véhicule soit égale à ladite vitesse V recommandée. Préférentiellement, le dispositif d'assistance 4 assiste le conducteur selon au moins une des façons suivantes :
   ∘ en signalant audit conducteur la vitesse V recommandée en temps réel, par exemple au moyen dudit écran d'affichage et de la consigne de vitesse recommandée reçue;
   ∘ en signalant au conducteur un dépassement de ladite vitesse recommandée. Dans ce cas, ledit dispositif d'assistance comprend par exemple un calculateur capable de comparer la vitesse réelle dudit véhicule à sa vitesse V recommandée et configuré pour automatiquement alerter le conducteur, par exemple au moyen d'un signal visuel et/ou auditif, en cas de dépassement de la vitesse V recommandée ;
   ∘ en contrôlant la vitesse dudit véhicule en fonction de la consigne de vitesse V recommandée. Dans ce dernier cas, ledit dispositif d'assistance à la conduite 4 a une fonction de régulateur de vitesse et est ainsi configuré pour adapter automatiquement la vitesse dudit véhicule en fonction de variations en fonction du temps de la valeur de la consigne de vitesse recommandée, et donc en fonction de variations du marquage au sol 21.

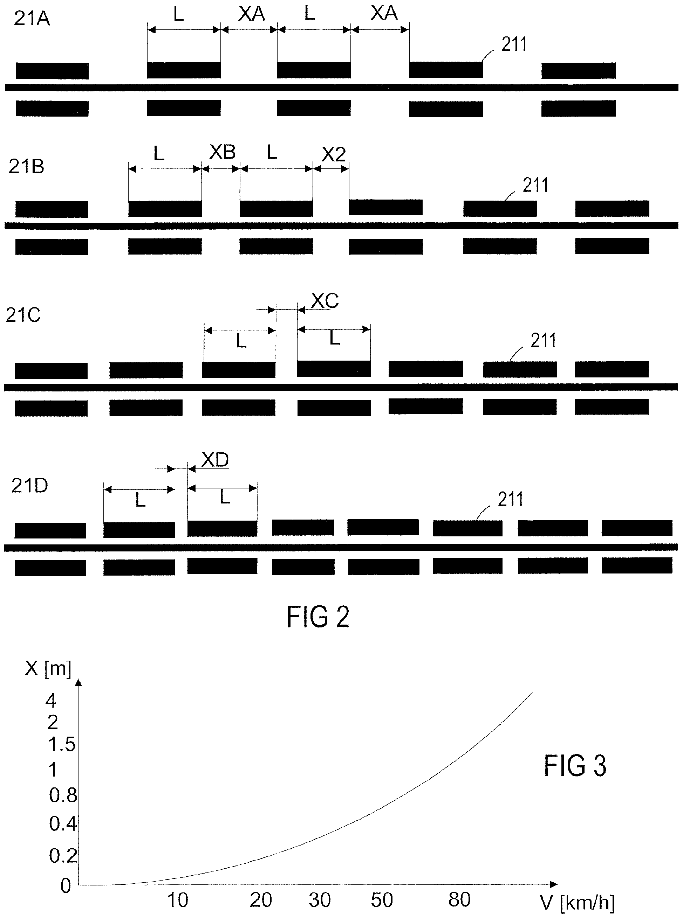

Les figures 2 à 4 présentent de manière plus détaillées des exemples de codage de vitesses recommandées au moyen de marquages au sol 21 tel que revendiqué par la présente invention.

La figure 2 présente différents marquages au sol, respectivement 21A, 21B, 21C, 21D, pouvant être apposés sur le sol servant à la voie de circulation et servant à encoder, chacun, une vitesse recommandée différente. Le marquage au sol comprend par exemple un motif formé d'une ligne faite de tirets 211, destinée à être apposée sur le sol de la voie de circulation, par exemple par application d'une peinture sur ledit sol, chaque tiret 211 étant préférentiellement de longueur L identique pour les différents marquages au sol 21A-21D, l'espacement entre les tirets pour les différents marquages encodant une vitesse recommandée différente. Par exemple, le marquage 21A comprend une ligne faite de tirets de longueur L séparés par un espacement de longueur XA servant à encoder une première vitesse recommandée, par exemple 40km/h. Similairement, le marquage 21B comprend une ligne faite de tirets de longueur L séparés par un espacement de longueur XB servant à encoder une seconde vitesse recommandée, par exemple 30km/h, avec par exemple XA > XB. De même, le marquage 21C comprend une ligne faite de tirets de longueur L séparés par un espacement de longueur XC servant à encoder une troisième vitesse recommandée, par exemple 20km/h, avec par exemple XA > XB > XC. Et finalement, le marquage 21D comprend une ligne faite de tirets de longueur L séparés par un espacement de longueur XD servant à encoder une quatrième vitesse recommandée, par exemple 10km/h, avec par exemple XA > XB > XC > XD. Ainsi, la présente invention propose d'apposer un marquage au sol constitué d'une ligne faite de tirets de longueurs préférentiellement égales et dont l'espacement entre tirets successifs, ou plus précisément la longueur dudit.. espacement, est une fonction de la vitesse recommandée, par exemple est proportionnelle à la vitesse recommandée. La longueur dudit espacement servant ainsi en particulier à encoder la vitesse recommandée.

Selon ce mode de réalisation préféré, le dispositif de détermination 3 comprend une mémoire dans laquelle est en particulier mémorisée la longueur L desdits tirets en tant que paramètre nominal. La mémoire dudit dispositif de détermination 3 peut par exemple également comprendre une table comprenant en entrée des valeurs de longueurs X de l'espacement entre deux tirets et faisant correspondre, en sortie, une valeur de vitesse recommandée pour chaque entrée, i.e. pour chaque valeur de la longueur X de l'espacement entre deux tirets. Ledit dispositif de détermination peut également comprendre une fonction encodée dans un programme et mise en oeuvre par ledit dispositif de détermination, ladite fonction faisant correspondre à une longueur X de l'espacement entre deux tirets successifs une et une seule vitesse V recommandée, tel qu'illustré en figure 3.

Le dispositif de détermination est capable d'analyser chaque image acquise par la caméra 2 afin d'y identifier le marquage au sol et de déterminer la longueur X séparant deux tirets consécutifs. En effet, pour chaque image, le dispositif de détermination est configuré par exemple pour mesurer dans ladite image (par exemple en pixels) une longueur L_i correspondant à la longueur L réelle d'un tiret du marquage au sol, une longueur X_i correspondant à la longueur X réelle de l'espacement entre deux tirets consécutifs du marquage au sol, et calculer la longueur X réelle de l'espacement entre deux tirets en utilisant une simple règle de trois : X = (X_i/L_i) · L, où L est ledit paramètre nominal mémorisé dans une mémoire dudit dispositif de détermination 3 et, X_i et L_i sont mesurés dans les images acquises par la caméra. Une fois la valeur X de l'espacement entre deux tirets déterminée, le dispositif de détermination 3 est configuré pour déterminer la vitesse V recommandée en utilisant par exemple ladite table ou ladite fonction telle qu'illustrée en figure 3. Une consigne de vitesse V recommandée est ensuite transmise au dispositif d'assistance 4.

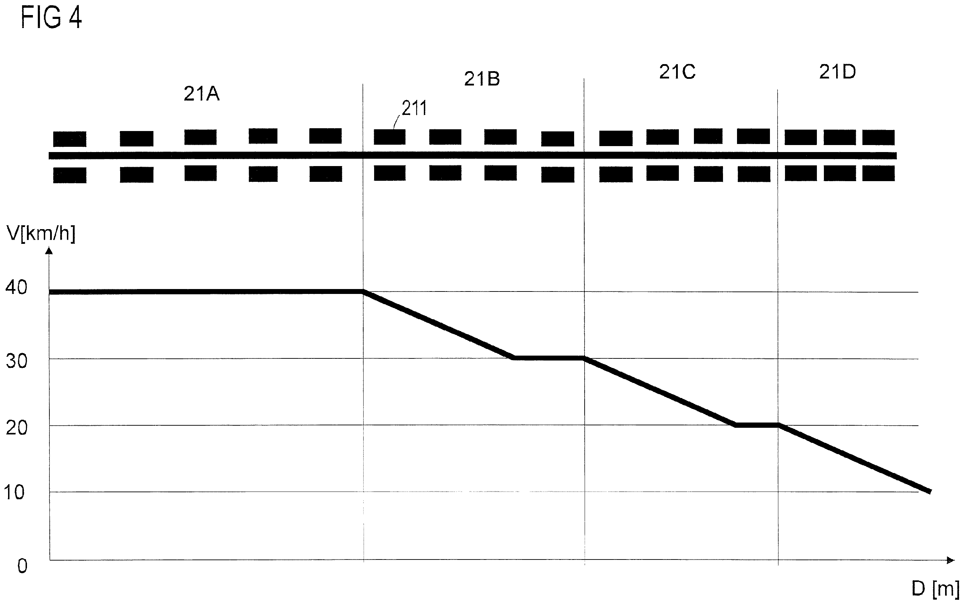

La figure 4 illustre une correspondance entre l'espacement XA, XB, XC, XD mesurable par le dispositif de détermination à partir d'images des marquages au sol représentés en Fig. 2 et des vitesses recommandées, respectivement 40km/h pour le marquage 21A, 30km/h pour le marquage 21B, 20km/h pour le marquage 21C, et 10km/h pour le marquage 21D lorsque ledit véhicule se déplace d'amont vers aval sur une distance D. Selon la présente invention, le dispositif d'assistance est notamment configuré pour permettre une transition douce d'une première vitesse dudit véhicule à une seconde vitesse dudit véhicule lors d'une variation de la consigne de vitesse recommandée ainsi qu'illustré en Figure 4 lors d'une décélération permettant de passer d'une vitesse initiale égale 40km/h et correspondant au marquage 21A à une vitesse de 10km/h correspondant au marquage 21D. Selon la présente invention, l'espacement entre les tirets peut également progressivement varier d'une première longueur X1 correspondant à une vitesse initiale (par exemple 40km/h) à une deuxième longueur X2 correspondant à une vitesse finale (par exemple 10km/h) de façon à garantir un changement continu de la vitesse initiale à la vitesse finale au moyen d'une variation continue de la consigne de vitesse recommandée. Le dispositif d'assistance 4 est en particulier capable de contrôler automatiquement la vitesse dudit véhicule en fonction de la consigne de vitesse recommandée reçue, le passage d'une première vitesse à une seconde vitesse étant notamment réalisé dans un laps de temps prédéfini afin d'éviter toute décélération ou accélération brusque.

Bien évidemment, d'autres techniques permettent d'encoder la vitesse V recommandée, par exemple en jouant sur le rapport entre la longueur du tiret et la longueur de l'espacement, à chaque rapport entre lesdites longueurs correspondant alors une vitesse recommandée. Egalement, mis à part le motif du marquage au sol formé d'une ligne faite de tirets, d'autres motifs pourraient servir à encoder la vitesse recommandée au sol, lesdits motifs étant par exemple des motifs géométriques dont une dimension (par exemple longueur ou largeur) reste invariante (ci-après appelée « dimension invariante ») quelle que soit la vitesse recommandée destinée à être encodée, et une autre dimension (par exemple respectivement largeur ou longueur) dite « variable » et qui varie en fonction de la vitesse recommandée à encoder. De manière générale, afin de déterminer la vitesse recommandée pour une partie de voie de circulation, le dispositif de détermination calcule en particulier le rapport entre la dimension invariante et la dimension variable pour ledit motif dans les images acquises par la caméra. Préférentiellement, le dispositif de détermination comprend une table faisant correspondre une valeur dudit rapport (en entrée de ladite table) à une vitesse recommandée (en sortie de ladite table). Optionnellement, et comme expliqué plus haut, ledit dispositif de détermination peut comprendre une fonction encodée dans un programme donnant pour chaque valeur dudit rapport une vitesse recommandée, ladite fonction permettant ainsi de déterminer la vitesse recommandée en fonction dudit rapport d'une façon similaire à la fonction illustrée en figure 3.

Finalement, la présente invention propose une méthode et un système simples d'assistance à la conduite du véhicule permettant d'utiliser un marquage au sol servant au guidage dudit véhicule afin d'effectuer un contrôle de la vitesse de ce dernier par encodage d'une vitesse recommandée dans ledit marquage au sol servant au guidage.

## Revendications

1. Système d'assistance à la conduite d'un véhicule (1) destiné à se déplacer sur une voie de circulation (11), ledit système comprenant :
- une caméra (2) destinée à être embarquée à bord dudit véhicule (1) et configurée pour prendre des images d'au moins un marquage (21) au sol configuré pour encoder une vitesse recommandée pour une partie de la voie de circulation (11);
- un dispositif embarqué (3) de détermination de vitesse recommandée configuré pour déterminer en temps réel la vitesse recommandée pour ledit véhicule pour ladite partie de voie de circulation (11) à partir des images acquises par la caméra (2) en décodant dans les images prises par la caméra (2) ledit marquage au sol, et pour transmettre une consigne de vitesse recommandée;
- un dispositif d'assistance (4) à la conduite configuré pour recevoir ladite consigne de vitesse recommandée et utiliser cette dernière afin d'assister ledit conducteur lors de la conduite du véhicule sur ladite partie de voie de circulation ;
**caractérisé en ce que** ledit marquage (21) au sol comprend un motif géométrique comprenant une dimension variable en fonction de la vitesse recommandée et servant à encoder cette dernière, et une dimension invariante qui demeure inchangée quelle que soit la vitesse recommandée pour la partie de voie de circulation, et le dispositif embarqué (3) de détermination est configuré pour calculer la vitesse recommandée en fonction d'un rapport entre la dimension invariante et la dimension variable mesurées dans les images acquises par la caméra (2) .

2. Système d'assistance à la conduite selon la revendication 1, pour lequel le dispositif d'assistance (4) est configuré pour fournir au moins une des assistances suivantes:
- une indication au conducteur dudit véhicule et en temps réel de la consigne de vitesse recommandée;
- un signalement au conducteur d'un dépassement de la vitesse recommandée, le dispositif d'assistance étant configuré pour comparer en temps réel la vitesse réelle dudit véhicule à la consigne de vitesse recommandée;
- un contrôle automatique de la vitesse du véhicule en fonction de la vitesse recommandée obtenue via ladite consigne.

3. Système d'assistance à la conduite selon revendication 1 ou 2, pour lequel ledit motif est une ligne faite de tirets (211) espacés les uns des autres, ladite dimension invariante étant la longueur L identique de chaque tiret (211), et la dimension variable étant la longueur X de l'espacement entre deux tirets successifs, ladite longueur X variant en fonction de la vitesse recommandée pour ladite partie de voie de circulation et servant à encoder ladite vitesse recommandée.

4. Système d'assistance à la conduite selon revendication 1 ou 2, pour lequel ledit motif est une ligne faite de tirets (211) espacés les uns des autres, ladite dimension invariante étant la longueur X identique de l'espacement entre les tirets successifs, et la dimension variable étant la longueur L du tiret (211), ladite longueur L variant en fonction de la vitesse recommandée pour ladite partie de voie de circulation et servant à encoder ladite vitesse recommandée.

5. Système d'assistance à la conduite selon une des revendications 1 à 4, pour lequel le dispositif de détermination (3) comprend une table ou une fonction encodée dans un programme et configurée pour faire correspondre en donnée d'entrée le rapport entre la dimension invariante et la dimension variable telle que mesurées dans l'image acquise par la caméra (2) à une et une seule vitesse recommandée en tant que donnée de sortie.

6. Système d'assistance à la conduite selon une des revendications 1 à 5, pour lequel le marquage (21) au sol est configuré pour prédéfinir une trajectoire pour ledit véhicule (1) et sert de moyen de guidage pour ce dernier.

7. Méthode d'assistance à la conduite d'un véhicule (1) se déplaçant le long d'une voie de circulation (11) par détermination d'une vitesse recommandée pour ledit véhicule (1) pour au moins une partie de ladite voie de circulation (11), la méthode comprenant :
- un codage d'une vitesse recommandée au moyen d'un marquage (21) au sol pour au moins une partie de la voie de circulation;
- une détermination en temps réel de ladite vitesse recommandée par décodage dudit codage de la vitesse recommandée dans des images acquises par une caméra (2) embarquée à bord dudit véhicule (1);
- une utilisation de ladite vitesse recommandée pour assister ledit conducteur lors de sa conduite du véhicule sur ladite partie de voie de circulation,
**caractérisée en ce que** ledit marquage (21) au sol comprend un motif géométrique comprenant une dimension variable en fonction de la vitesse recommandée et servant à encoder cette dernière, et une dimension invariante qui demeure inchangée quelle que soit la vitesse recommandée pour la partie de voie de circulation et **en ce que** la vitesse recommandée est déterminée en fonction d'un rapport entre la dimension invariante et la dimension variable mesurées dans les images acquises par la caméra.

8. Méthode d'assistance à la conduite selon la revendication 8, **caractérisé en ce que** ladite vitesse recommandée est utilisée pour assister ledit conducteur selon au moins une des façons suivantes :
- par une indication au conducteur dudit véhicule et en temps réel de ladite vitesse recommandée ;
- par un signalement au conducteur d'un dépassement de la vitesse recommandée ;
- par un contrôle automatique de la vitesse du véhicule en fonction de la vitesse recommandée.

9. Méthode d'assistance à la conduite selon une des revendications 7 ou 8, **caractérisée en ce que** ledit motif est une ligne faite de tirets (211) espacés les uns des autres, ladite dimension invariante étant la longueur L identique de chaque tiret (211), et la dimension variable étant la longueur X de l'espacement entre deux tirets successifs, ladite longueur X variant en fonction de la vitesse recommandée pour ladite partie de voie de circulation de façon à encoder ladite vitesse recommandée.

10. Méthode d'assistance à la conduite selon une des revendications 7 à 9, comprenant un guidage dudit véhicule (1) au moyen dudit marquage (21) au sol.

## Patentansprüche

1. Fahrerassistenzsystem eines Fahrzeugs (1), das dazu bestimmt ist, sich auf einer Fahrbahn (11) zu bewegen, wobei das System umfasst:
- eine Kamera (2), die dazu bestimmt ist, an Bord des Fahrzeugs (1) mitgeführt zu werden, und dafür ausgelegt ist, Bilder wenigstens einer Markierung (21) am Boden aufzunehmen, die dafür ausgelegt ist, eine für einen Abschnitt der Fahrbahn (11) empfohlene Geschwindigkeit zu codieren;
- eine bordseitige Vorrichtung (3) zur Bestimmung der empfohlenen Geschwindigkeit, die dafür ausgelegt ist, in Echtzeit die für das Fahrzeug empfohlene Geschwindigkeit für den Fahrbahnabschnitt (11) aus den von der Kamera (2) erfassten Bildern durch Decodieren der Markierung am Boden in den von der Kamera (2) aufgenommenen Bildern zu bestimmen und einen sich auf die empfohlene Geschwindigkeit beziehenden Sollwert zu übertragen;
- eine Fahrerassistenzvorrichtung (4), die dafür ausgelegt ist, den sich auf die empfohlene Geschwindigkeit beziehenden Sollwert zu empfangen und diesen Letzteren zu verwenden, um den Fahrer beim Führen des Fahrzeugs auf dem Fahrbahnabschnitt zu unterstützen;
**dadurch gekennzeichnet, dass** die Markierung (21) am Boden ein geometrisches Muster umfasst, das eine Abmessung, die in Abhängigkeit von der empfohlenen Geschwindigkeit variabel ist und dazu dient, diese Letztere zu codieren, und eine unveränderliche Abmessung, welche unabhängig von der empfohlenen Geschwindigkeit für den Fahrbahnabschnitt unverändert bleibt, umfasst, und die bordseitige Vorrichtung (3) zur Bestimmung dafür ausgelegt ist, die empfohlene Geschwindigkeit in Abhängigkeit von einem Verhältnis zwischen der unveränderlichen Abmessung und der variablen Abmessung, die in den von der Kamera (2) erfassten Bildern gemessen wurden, zu berechnen.

2. Fahrerassistenzsystem nach Anspruch 1, wobei die Assistenzvorrichtung (4) dafür ausgelegt ist, wenigstens eines der folgenden Assistenzelemente zu liefern:
- eine Anzeige des sich auf die empfohlene Geschwindigkeit beziehenden Sollwertes für den Führer des Fahrzeugs in Echtzeit;
- eine Signalisierung einer Überschreitung der empfohlenen Geschwindigkeit für den Fahrer, wobei die Assistenzvorrichtung dafür ausgelegt ist, in Echtzeit die tatsächliche Geschwindigkeit des Fahrzeugs mit dem sich auf die empfohlene Geschwindigkeit beziehenden Sollwert zu vergleichen;
- eine automatische Steuerung der Geschwindigkeit des Fahrzeugs in Abhängigkeit von der über den Sollwert erhaltenen empfohlenen Geschwindigkeit.

3. Fahrerassistenzsystem nach Anspruch 1 oder 2, wobei das Muster einer Linie ist, die von voneinander beabstandeten Strichen (211) gebildet wird, wobei die unveränderliche Abmessung die identische Länge L jedes Striches (211) ist und die variable Abmessung die Länge X des Zwischenraums zwischen zwei aufeinander folgenden Strichen ist, wobei diese Länge X in Abhängigkeit von der empfohlenen Geschwindigkeit für den Fahrbahnabschnitt variiert und dazu dient, die empfohlene Geschwindigkeit zu codieren.

4. Fahrerassistenzsystem nach Anspruch 1 oder 2, wobei das Muster einer Linie ist, die von voneinander beabstandeten Strichen (211) gebildet wird, wobei die unveränderliche Abmessung die identische Länge X des Zwischenraums zwischen den aufeinander folgenden Strichen ist und die variable Abmessung die Länge des Striches (211) ist, wobei diese Länge L in Abhängigkeit von der empfohlenen Geschwindigkeit für den Fahrbahnabschnitt variiert und dazu dient, die empfohlene Geschwindigkeit zu codieren.

5. Fahrerassistenzsystem nach einem der Ansprüche 1 bis 4, wobei die Bestimmungsvorrichtung (3) eine Tabelle oder eine Funktion umfasst, die in einem Programm codiert ist und dafür ausgelegt ist, eine Entsprechung des Verhältnisses zwischen der unveränderlichen Abmessung und der variablen Abmessung, wie sie in dem von der Kamera (2) erfassten Bild gemessen wurden, als Eingangsdatenwert zu einer und nur einer empfohlenen Geschwindigkeit als Ausgangsdatenwert herzustellen.

6. Fahrerassistenzsystem nach einem der Ansprüche 1 bis 5, wobei die Markierung (21) am Boden dafür ausgelegt ist, einen Bewegungsweg für das Fahrzeug (1) vorzudefinieren, und als Führungsmittel für dieses Letztere dient.

7. Fahrerassistenzverfahren für ein Fahrzeug (1), das sich entlang einer Fahrbahn (11) bewegt, durch Bestimmung einer empfohlenen Geschwindigkeit für das Fahrzeug (1) für wenigstens einen Abschnitt dieser Fahrbahn (11), wobei das Verfahren umfasst:
- eine Codierung einer empfohlenen Geschwindigkeit mittels einer Markierung (21) am Boden für wenigstens einen Abschnitt der Fahrbahn;
- eine Bestimmung der empfohlenen Geschwindigkeit in Echtzeit durch Decodierung der Codierung der empfohlenen Geschwindigkeit in Bildern, die von einer Kamera (2) erfasst wurden, die an Bord des Fahrzeugs (1) mitgeführt wird;
- eine Verwendung der empfohlenen Geschwindigkeit, um den Fahrer beim Führen des Fahrzeugs auf dem Fahrbahnabschnitt zu unterstützen,
**dadurch gekennzeichnet, dass** die Markierung (21) am Boden ein geometrisches Muster umfasst, das eine Abmessung, die in Abhängigkeit von der empfohlenen Geschwindigkeit variabel ist und dazu dient, diese Letztere zu codieren, und eine unveränderliche Abmessung, welche unabhängig von der empfohlenen Geschwindigkeit für den Fahrbahnabschnitt unverändert bleibt, umfasst, und dadurch, dass die empfohlene Geschwindigkeit in Abhängigkeit von einem Verhältnis zwischen der unveränderlichen Abmessung und der variablen Abmessung, die in den von der Kamera erfassten Bildern gemessen wurden, bestimmt wird.

8. Fahrerassistenzverfahren nach Anspruch 8, **dadurch gekennzeichnet, dass** die empfohlene Geschwindigkeit verwendet wird, um den Fahrer auf wenigstens eine der folgenden Weisen zu unterstützen:
- durch eine Anzeige der empfohlenen Geschwindigkeit für den Führer des Fahrzeugs in Echtzeit;
- durch eine Signalisierung einer Überschreitung der empfohlenen Geschwindigkeit für den Fahrer;
- durch eine automatische Steuerung der Geschwindigkeit des Fahrzeugs in Abhängigkeit von der empfohlenen Geschwindigkeit.

9. Fahrerassistenzverfahren nach einem der Ansprüche 7 oder 8, **dadurch gekennzeichnet, dass** das Muster einer Linie ist, die von voneinander beabstandeten Strichen (211) gebildet wird, wobei die unveränderliche Abmessung die identische Länge L jedes Striches (211) ist und die variable Abmessung die Länge X des Zwischenraums zwischen zwei aufeinander folgenden Strichen ist, wobei diese Länge X in Abhängigkeit von der empfohlenen Geschwindigkeit für den Fahrbahnabschnitt variiert, so dass die empfohlene Geschwindigkeit codiert wird.

10. Fahrerassistenzverfahren nach einem der Ansprüche 7 bis 9, welches eine Führung des Fahrzeugs (1) mittels der Markierung (21) am Boden umfasst.

## Claims

1. Driver assist system of a vehicle (1) designed to move on a traffic lane (11), said system comprising:
- a camera (2) that is designed to be carried on board said vehicle (1) and that is designed to capture images of at least one ground marking (21) designed to encode a recommended speed for a portion of the traffic lane (11);
- an on-board recommended-speed-determination device (3) that is designed to determine, in real time, the recommended speed for said vehicle for said traffic lane portion (11) from images captured by the camera (2) by decoding said ground marking in the images captured by the camera (2), and to transmit a recommended speed setpoint;
- a driver assist device (4) designed to receive said recommended speed setpoint and to use this latter to assist said driver when driving the vehicle on said traffic lane portion;
**characterised in that** said ground marking (21) includes a geometric pattern including a dimension that is variable as a function of the recommended speed and that is used to encode this latter, and an invariable dimension that remains unchanged, regardless of the recommended speed for the traffic lane portion, and the on-board determination device (3) is designed to calculate the recommended speed as a function of a ratio between the invariable dimension and the variable dimension measured in the images captured by the camera (2).

2. Driver assist system according to claim 1, in which the assist device (4) is designed to provide assistance in at least one of the following forms:
- informing the driver of said vehicle of the recommended speed setpoint in real time;
- warning the driver that the recommended speed has been exceeded, the assist device being designed to compare, in real time, the actual speed of said vehicle with the recommended speed setpoint;
- automatically controlling the speed of the vehicle as a function of the recommended speed obtained using said setpoint.

3. Driver assist system according to claim 1 or 2, in which said pattern is a line of dashes (211) spaced apart from one another, said invariable dimension being the identical length L of each dash (211), and the variable dimension being the length X of the space between two successive dashes, said length X varying as a function of the recommended speed for said traffic lane portion and being used to encode said recommended speed.

4. Driver assist system according to claim 1 or 2, in which said pattern is a line of dashes (211) spaced apart from one another, said invariable dimension being the identical length X of the spacing between successive dashes, and the variable dimension being the length L of the dash (211), said length L varying as a function of the recommended speed for said traffic lane portion and being used to encode said recommended speed.

5. Driver assist system according to one of claims 1 to 4, in which the determination device (3) includes a table or a function encoded in a program and configured to match the input data of the ratio between the invariable dimension and the variable dimension, as measured in the image captured by the camera (2), with a unique recommended speed as output data.

6. Driver assist system according to one of claims 1 to 5, in which the ground marking (21) is designed to predetermine a path for said vehicle (1) and acts as guide means for this latter.

7. Driver assist method for a vehicle (1) travelling along a traffic lane (11) by determining a recommended speed for said vehicle (1) for at least one portion of said traffic lane (11), the method comprising:
- an encoding of a recommended speed using a ground marking (21) for at least one portion of the traffic lane;
- determination in real time of said recommended speed by decoding said encoding of the recommended speed in the images captured by a camera (2) carried on board said vehicle (1);
- use of said recommended speed to assist said driver when driving the vehicle on said traffic lane portion,
**characterised in that** said ground marking (21) includes a geometric pattern including a dimension that is variable as a function of the recommended speed and that is used to encode this latter, and an invariable dimension that remains unchanged, regardless of the recommended speed for the traffic lane portion and **in that** the recommended speed is determined as a function of a ratio between the invariable dimension and the variable dimension measured in the images captured by the camera.

8. Driver assist method according to claim 8, **characterised in that** said recommended speed is used to assist said driver in one of the following ways:
- by informing the driver of said vehicle of said recommended speed in real time;
- by warning the driver that the recommended speed has been exceeded;
- by automatically controlling the speed of the vehicle as a function of the recommended speed.

9. Driver assist method according to one of claims 7 or 8, **characterised in that** said pattern is a line of dashes (211) spaced apart from one another, said invariable dimension being the identical length L of each dash (211), and the variable dimension being the length X of the spacing between two successive dashes, said length X varying as a function of the recommended speed for said traffic lane portion such as to encode said recommended speed.

10. Driver assist method according to one of claims 7 to 9, including guidance of said vehicle (1) using said ground marking (21).
